# EUROPÄISCHE PATENTSCHRIFT

(11) **EP 0 739 670 B1**
(45) Veröffentlichungstag und Bekanntmachung des Hinweises auf die Patenterteilung: **11.07.2001**
(21) Anmeldenummer: 96106296.5
(22) Anmeldetag: 22.04.1996
(51) Int. Cl.: B23B 11/00, B23Q 16/06, B23Q 7/04

(54) **Arretierbare Spindelanordnung, insbesondere zum Abgreifen eines Werkstücks an einer Drehmaschine**
Lockable spindle arrangement, in particular for clamping workpiece on a lathe
Dispositif de broche immobilisable, en particulier pour la prise de pièce sur un tour

(30) Priorität: 24.04.1995 DE 19515045
(43) Veröffentlichungstag der Anmeldung: 30.10.1996
(73) Patentinhaber: Traub Drehmaschinen GmbH, 73262 Reichenbach (DE)
(72) Erfinder: Forst, Heinz, 73773 Aichwald (DE)
(74) Vertreter: Goetz, Rupert, Dipl.-Ing.

(56) Entgegenhaltungen:
- WO-A-88/02320
- DE-C- 3 323 502

## Beschreibung

Die Erfindung betrifft eine Spindelanordnung nach dem Oberbegriff des Anspruchs 1.

Drehmaschinen werden häufig so ausgestattet und programmiert, daß sie gleichzeitig Arbeitsgänge an der Vorderseite eines Werkstücks und an der Rückseite eines zuvor an seiner Vorderseite bearbeiteten Werkstücks ausführen. Das vorderseitig zu bearbeitende Werkstück, beispielsweise das vordere Ende einer Werkstoffstange, wird in einer Haupt- oder Arbeitsspindel gespannt gehalten und rotiert mit dieser, während es von Werkzeugen bearbeitet wird, die an einem Werkzeugträger, beispielsweise einem Revolver, gehalten sind. Nach der Vorderseitenbearbeitung wird das Werkstück, während es noch rotiert, von einer Werkstückspindel erfaßt, die zu einer an dem selben oder einem anderen Werkzeugträger befestigten Spindelanordnung gehört, welche in eine mit der Arbeitsspindel fluchtende Stellung gebracht worden ist. Die Werkstückspindel wird vom rotierenden Werkstück auf die Drehgeschwindigkeit der Arbeitsspindel beschleunigt, ehe eine an der Werkstückspindel angeordnete Werkstück-Spanneinrichtung betätigt wird, um das Werkstück zu spannen. Sodann wird das Werkstück von der Arbeitsspindel freigegeben oder, falls es Bestandteil einer Werkstückstange ist, von dieser abgestochen. Anschließend wird das nun mit seiner Vorderseite in der Werkstück-Spanneinrichtung der Werkstückspindel steckende Werkstück in eine Bearbeitungsstation gebracht, in der mindestens ein drehantreibbares Werkzeug, beispielsweise ein Bohrer oder ein Fräser, für die Rückseitenbearbeitung des Werkstücks bereitsteht. Ehe die Rückseitenbearbeitung beginnen kann, wird die Werkstückspindel abgebremst und gegen Drehen gesichert.

Bei einer bekannten gattungsgemäßen Spindelanordnung (DE 33 23 502 C1) ist die Werkstückspindel durch ein Getriebe mit einem umkehrbaren Antriebsmotor verbunden. An der Werkstückspindel ist eine Nockenscheibe befestigt, die mehrere von je einer sanft ansteigenden Rampe und einem radial abfallenden Anschlag gebildete Nocken aufweist. Der Nockenscheibe ist ein radial verschiebbar geführter Bolzen zugeordnet, der durch eine erste Feder in Richtung von der Nockenscheibe weg vorgespannt ist, so daß die Werkstückspindel sich normalerweise frei drehen kann. Wenn jedoch die Werkstückspindel durch Schalten eines sie tragenden Revolvers in eine Bearbeitungssation für Rückseitenbearbeitung gelangt, drückt ein dort stationär angeordneter Nocken den Bolzen über eine zweite Feder gegen die Nockenscheibe, so daß die radial innere Stirnfläche des Bolzens auf einer der Rampen gleitet, bis die Werkstückspindel zum Stillstand gekommen ist. Sodann wird die Werkstückspindel von ihrem umkehrbaren Antriebsmotor rückwärts gedreht, bis der Bolzen gegen den Anschlag des benachbarten Nockens stößt. Dadurch ist die Werkstückspindel in einer definierten Drehwinkelstellung festgehalten.

Bei dieser bekannten Spindelanordnung ist damit zu rechnen, daß die Werkstückspindel, sofern sie nicht von ihrem umkehrbaren Antrieb abgebremst wird, unter der Einwirkung des Bolzens erst dann zum Stillstand kommt, wenn dieser über eine je nach träger Masse und ursprünglicher Drehzahl der Werkstückspindel mehr oder weniger große Anzahl Nocken hinweggeratscht ist und dabei Lärm und auch Verschleiß hervorgerufen hat.

Der Erfindung liegt die Aufgabe zugrunde, eine gattungsgemäße Spindelanordnung derart weiterzubilden, daß ihre Werkstückspindel sich schnell und schonend abbremsen läßt, um anschließend arretiert zu werden.

Die Aufgabe ist erfindungsgemäß mit den Merkmalen des Anspruchs gelöst.

Es ist bekannt, Spindellager unter variable axiale oder radiale Vorspannung zu setzen, um sie an unterschiedliche Belastungen und Drehzahlen anzupassen (Prospekt "System Varioring" der Fa. Universal-Kugellager-Fabrik GmbH, D-13403 Berlin). Dabei wird die Vorspannung im Leerlauf zurückgenommen, um das Reibmoment der Lagerung zu vermindern. Eine Bremsung wird also gerade nicht angestrebt.

Das ferner zum Stand der Technik gehörende Dokument WO88/02320 betrifft eine an einem landwirtschaftlichen oder industriellen Traktor vorgesehene Zapfwelle, die üblicherweise von der Antriebsmaschine des Traktors über eine nur bei Bedarf eingeschaltete Schaltkupplung angetrieben wird, nämlich dann, wenn ein an den Traktor angebautes Gerät, z.B. eine Mähmaschine, über die Zapfwelle angetrieben werden soll. Dabei besteht das Problem, daß die Schaltkupplung, besonders wenn es sich um eine ölgekühlte handelt, möglicherweise ein vagabundierendes Drehmoment überträgt, das zu einer unerwünschten Drehung des Antriebsstranges zum Anbaugerät führt und dieses in Gang setzt. Dem soll entgegengewirkt werden, und zwar gerade nicht durch eine Verrastung sondern durch eine reibungserhöhende Maßnahme, die darin besteht, daß ein Kegelrollenlager in dem Antriebsstrang in axialer Richtung verspannt wird und dadurch in einen Zustand erhöhter Rollreibung versetzt wird.

Das erfindungsgemäße Bremsen durch Verspannen der Spindellagerung ist praktisch geräusch- und verschleißfrei, denn die Spindellagerung ist für die größten bei der Werkstückbearbeitung vorkommenden Axial- und Radialkräfte ausgelegt, und diese Kräfte sind erheblich größer als die Kraft, die auf die Spindellagerung aufgebracht werden muß, um die Werkstückspindel rasch abzubremsen.

Vorteilhafte Weiterbildungen der Erfindung ergeben sich aus den Unteransprüchen.

Ein Ausführungsbeispiel der Erfindung wird im folgenden anhand schematischer Zeichnungen mit weiteren Einzelheiten erläutert. Es zeigen:
- Fig.1: eine erfindungsgemäße Spindelanordnung in einem Axialschnitt,
- Fig. 2: den Querschnitt II-II in Fig.1,
- Fig.3: einen hydraulischen Schaltplan der Spindelanordnung,
- Fig.4: eine mit einer erfindungsgemäßen Spindelanordnung ausgestattete Drehmaschine in einer ersten Arbeitsstellung und
- Fig.5: die gleiche Drehmaschine in einer zweiten Arbeitsstellung.

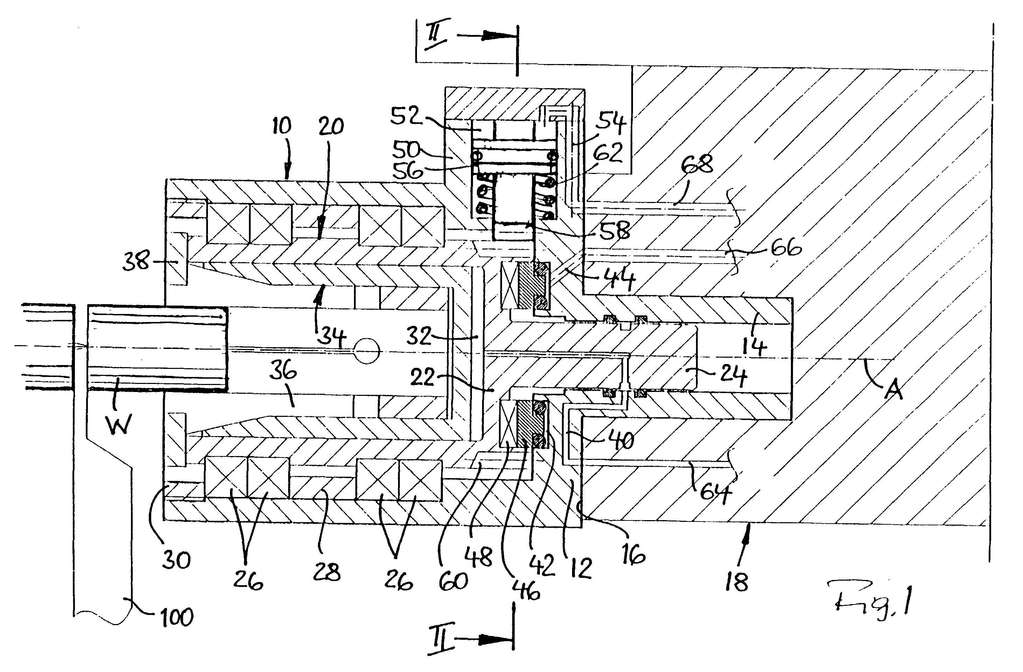

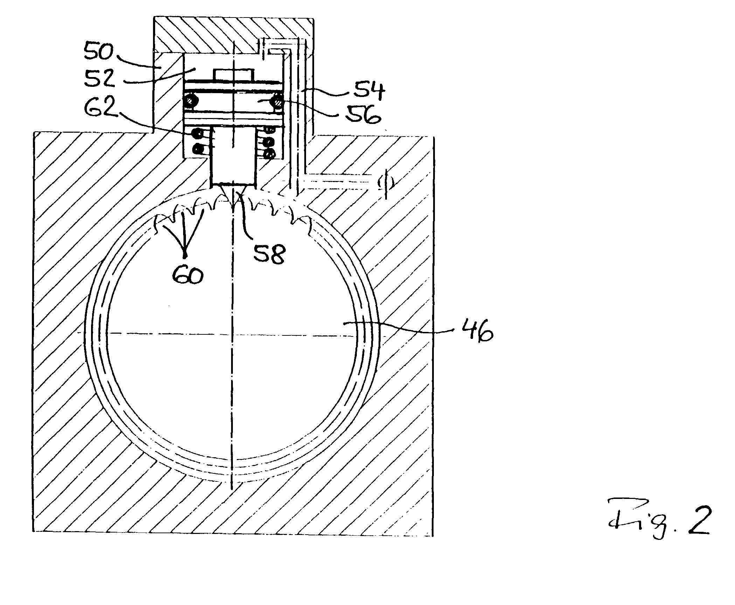

Die in Fig.1 und 2 dargestellte Spindelanordnung hat ein im wesentlichen quaderförmiges Gehäuse 10 mit einem ebenen Boden 12, von dem sich ein hohler, zylindrischer Schaft 14 wegerstreckt. Der Schaft 14 entspricht in Form und Abmessungen den Schäften üblicher Werkzeughalter zur Verwendung an Revolvern von Drehmaschinen, und mit diesem Schaft 14 ist das Gehäuse 10 in vergleichbarer Weise wie ein üblicher Werkzeughalter an einer Aufspannfläche 16 eines Werkzeugrevolvers 18 befestigt.

Das Gehäuse 10 umschließt eine glockenförmige Werkstückspindel 20, die einen Boden 22 sowie einen von diesem wegragenden, im hohlen Schaft 14 aufgenommenen Fortsatz 24 aufweist. Die Werkstückspindel 20 ist mit zwei Paar Wälzlagern 26, die durch einen Zwischenring 28 in axialem Abstand voneinander gehalten sind, im Gehäuse 10 gelagert. Die Wälzlager 26 sind im dargestellten Beispiel Schrägkugellager. Die so gebildete Spindellagerung ist durch eine in das Gehäuse 10 eingeschraubte Lagermutter 30 zusammengehalten.

In der Werkstückspindel 20 ist ein vorderer Zylinderraum 32 ausgebildet, und darin ist ein becherförmiger Kolben 34, der eine Spannzange 36 umschließt, axial verschiebbar geführt. Die Spannzange 36 stützt sich axial an einer Spindelkopfscheibe 38 ab, die am freien Ende der Werkstückspindel 20 befestigt ist. Durch einen Fluidkanal 40 läßt sich der Zylinderraum 32 unter Druck setzen, um den Kolben 34 in Richtung zur Spindelkopfscheibe 38 hin zu verschieben und dadurch die Spannzange 36 derart zu verengen, daß sie ein von ihr umschlossenes Werkstück W festspannt. Kolben 34 und Spannzange 36 bilden also zusammen mit den ihnen zugeordneten Bauteilen eine Werkstück-Spanneinrichtung üblicher Bauart.

Im Boden 12 des Gehäuses 10 ist ein ringförmiger hinterer Zylinderraum 42 ausgebildet, der an einen Fluidkanal 44 angeschlossen ist und einen ringförmigen Bremskolben 46 enthält. Zwischen diesem und dem Boden 22 der Werkstückspindel 20 ist ein Axialdruck-Wälzlager 48 angeordnet. Wenn der hintere Zylinderraum 42 unter Druck gesetzt wird, übt der Bremskolben 46 über das Axialdruck-Wälzlager 48 eine nach vorne, in Fig.1 nach links gerichtete Kraft auf die Werkstückspindel 20 aus, und diese belastet deshalb die Wälzlager 26 in axialer Richtung.

Diese Belastung hat zur Folge, daß die Innenringe der Wälzlager 26 in bezug auf deren Außenringe in axialer Richtung verspannt werden, da die Außenringe durch die Lagermutter 30 gehindert sind, sich in bezug auf das Gehäuse 10 zu verschieben. Die axiale Verspannung der Wälzlager 26 hat zur Folge, daß deren Lagerreibung erhöht wird, so daß die Werkstückspindel 20, wenn sie sich im Leerlauf dreht, rasch soweit abgebremst wird, daß sie ohne Beschädigungsgefahr mit den im folgenden beschriebenen Mitteln verriegelt werden kann.

Das Gehäuse 10 weist in seinem hinteren Bereich einen radialen Ansatz 50 auf, in dem ein Zylinderraum 52 und ein in diesem mündender Fluidkanal 54 ausgebildet sind. Im Zylinderraum 52 ist ein Rastkolben 56 radial zur Werkstückspindel 20 verschiebbar geführt. Mit dem Rastkolben 56 verbunden oder einstückig ausgebildet ist ein Rastkörper 58, dessen radial inneres Ende einen Keil mit zur Achse A der Werkstückspindel 20 paralleler Schneide ist. An der Werkstückspindel 20 ist eine Rastenanordnung 60 ausgebildet, in die der Rastkörper 58 einrasten kann. Im dargestellten Beispiel ist die Rastenanordnung 60 von spitzen Zähnen mit evolventenförmigem Profil gebildet. Der Rastkörper 58 ist durch eine Feder 62 radial nach außen vorgespannt, so daß er die Rastenanordnung 60 normalerweise freigibt und in sie nur dann einrastet, wenn der Zylinderraum 52 unter Druck gesetzt wird.

Der Werkzeugträger 18 weist Fluidkanäle 64, 66 und 68 auf, die gemäß Fig.1 bis 3 in je einen der Fluidkanäle 40, 44 und 54 des Gehäuses 10 münden. Der Fluidkanal 64 ist an ein Zweiwegeventil 70 angeschlossen, über das er wahlweise mit einer Druckölquelle verbindbar oder von Druck entlastbar ist. Die Fluidkanäle 66 und 68 sind über ein Mehrwegeventil 72 wechselweise an die Druckölquelle anschließbar und von Druck entlastbar. Das Mehrwegeventil 72 ist elektromagnetisch betätigbar und so geschaltet, daß immer erst der hintere Zylinderraum 42 unter Druck gesetzt wird, um den Bremskolben 46 zu betätigen, ehe der Zylinderraum 52 unter Druck gesetzt werden kann, um den Rastkolben 56 zu betätigen.

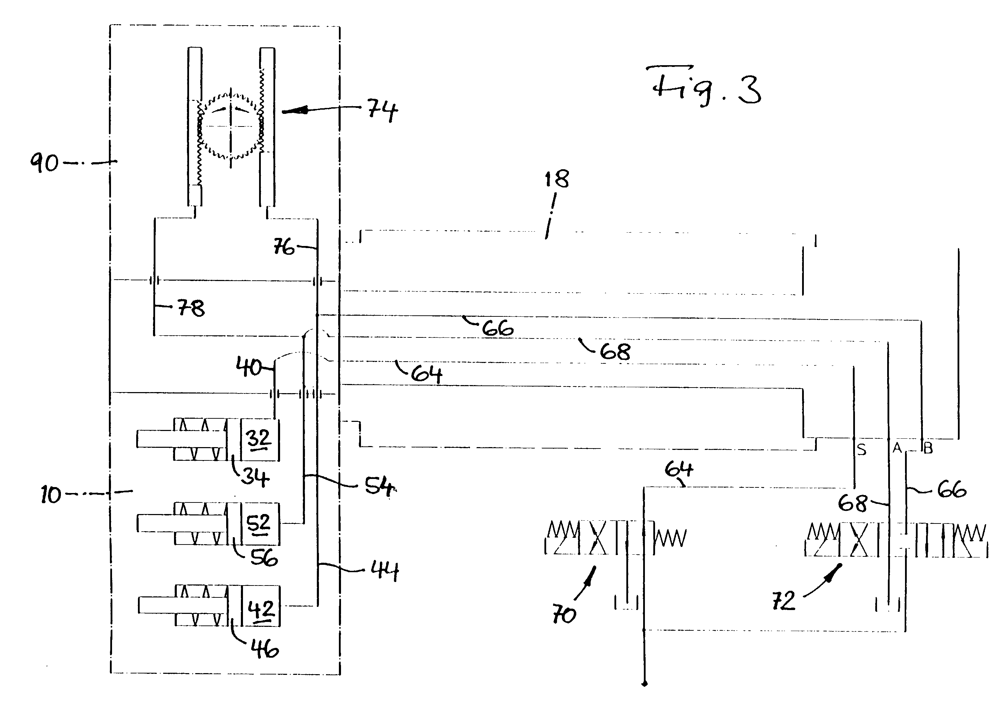

Die Fluidkanäle 66 und 68 können gemäß Fig.3 zum Steuern einer zusätzlichen, an den Werkzeugträger 18 angebauten Vorrichtung 74, die beispielsweise ein Gewinderollkopf sein kann, verwendet werden. Zu diesem Zweck sind in den Werkzeugträger 18 Abzweigkanäle 76 unf 78 eingearbeitet, die ständig mit dem Fluidkanal 66 bzw. 68 in Verbindung stehen.

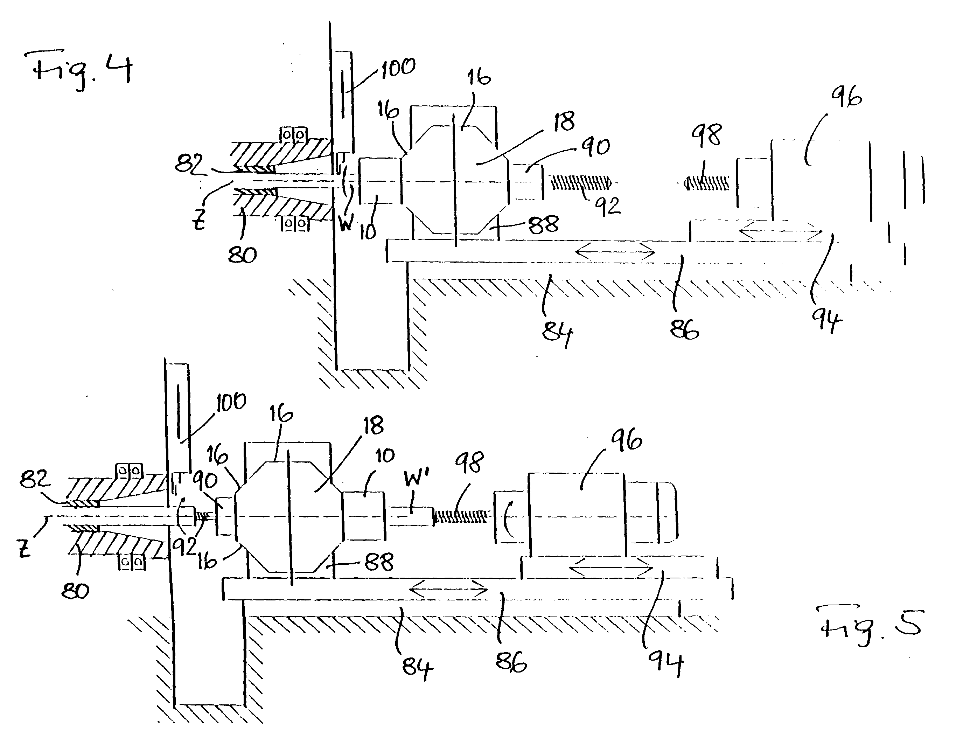

In Fig.4 und 5 ist eine Drehmaschine üblicher Bauart dargestellt, die mit der im vorstehenden beschriebenen Spindelanordnung ausgerüstet ist. Die Drehmaschine hat eine Arbeitsspindel 80 mit einer Spannzange 82 zum Einspannen stangenförmigen Werkstoffs, dessen vorderes Ende jeweils ein Werkstück W bildet. Auf einem Maschinenbett 84 ist ein parallel zur Achsrichtung der Arbeitsspindel 80 verschiebbarer Längsschlitten 86 geführt, auf dem ein Querschlitten 88 im rechten Winkel zur Achse Z der Arbeitsspindel 80 geführt ist. Auf dem Querschlitten 88 ist der schon in Fig.1 teilweise dargestellte Werkzeugträger 18 gelagert, der im dargestellten Beispiel ein Sternrevolver mit acht Aufspannflächen 16 ist. Eine der Aufspannflächen 16 ist mit der beschriebenen Spindelanordnung zum Abgreifen jeweils eines Werkstücks W von der Arbeitsspindel 80 besetzt. An den übrigen Aufspannflächen 16 läßt sich je ein Werkzeughalter 90 befestigen. In Fig.4 und 5 ist ein solcher Werkzeughalter 90 dargestellt, in den ein Werkzeug 92 zum vorderseitigen Bearbeiten des noch mit der Werkstoffstange zusammenhängenden Werkstücks W eingespannt ist; im dargestellten Beispiel ist das Werkzeug 92 ein Bohrer. Auf dem Längsschlitten 86 ist ferner ein Oberschlitten 94 mit einer zusätzlichen Bearbeitungseinheit 96 parallel zur Achse Z der Arbeitsspindel 80 verschiebbar geführt. Die Bearbeitungseinheit 96 trägt ein Werkzeug 98, im dargestellten Beispiel einen Bohrer, für die Bearbeitung eines Werkstücks W', das in der Werkstückspindel 20 festgehalten ist.

Gemäß Fig.1 und 4 wird der Werkzeugträger 18 in einer Schaltstellung, in der die Werkstückspindel 20 einem vorderseitig bearbeiteten, noch mit der rotierenden Werkstoffstange zusammenhängenden Werkstück W gegenübersteht, so zur Arbeitsspindel 80 hin bewegt, daß die Werkstückspindel 20 das Werkstück W erfaßt und von diesem auf die Drehzahl der Werkstoffstange beschleunigt wird. Sodann wird der vordere Zylinderraum 32 unter Druck gesetzt, so daß das Werkstück W von der Spannzange 36 gespannt wird. Anschließend wird das Werkstück W mit einem Abstechwerkzeug 100 von der Werkstoffstange abgestochen. Daraufhin wird der Werkzeugträger 18 weitergeschaltet, beispielsweise unmittelbar in die aus Fig.5 ersichtliche Stellung. Gleichzeitig wird der hintere Zylinderraum 42 unter Druck gesetzt, so daß der Bremskolben 46 eine die Wälzlager 26 verspannende und dadurch bremsende Kraft auf die Werkstückspindel 20 ausübt. Diese wird infolgedessen mindestens annähernd zum Stillstand gebracht. Anschließend wird durch Umsteuern des Mehrwegeventils 72 der hintere Zylinderraum 42 entlastet und der radial äußere Zylinderraum 52 unter Druck gesetzt, so daß der Rastkörper 58 in die Rastenanordnung 60 eingreift. Die Werkstückspindel 20 ist somit arretiert, wenn sie die Stellung gemäß Fig.5 einnimmt, in welcher das abgestochene, nun mit W' bezeichnete Werkstück der zusätzlichen Bearbeitungseinheit 96 gegenübersteht und von deren Werkzeug 98 ausgehend von der bisherigen Rückseite des Werkstücks bearbeitet wird. Währenddessen ist bei geöffneter Spannzange 82 die Werkstoffstange in der Arbeitsspindel 80 vorgeschoben und die Spannzange 82 wieder geschlossen worden, so daß das nächste Werkstück W gemäß Fig.5 vorderseitig bearbeitet werden kann, während das vorangegangene Werkstück W' rückseitig bearbeitet wird.

## Patentansprüche

1. Arretierbare Spindelanordnung, insbesondere zum Abgreifen eines Werkstücks (W) von einer rotierenden Arbeitsspindel (80) einer Drehmaschine, mit
- einer Werkstückspindel (20), die mittels einer Spindellagerung (26-30) in einem Gehäuse (10) gelagert ist, eine Werkstück-Spanneinrichtung (32-38) trägt und eine Rastenanordnung (60) aufweist,
- einem Rastkörper (58), der im Gehäuse (10) geführt und in die Rastenanordnung (60) einrastbar ist, und
- einer Einrichtung (42-48) zum Bremsen der Werkstückspindel (20),
dadurch gekennzeichnet, daß die Bremseinrichtung (42-48) zum Aufbringen einer die Spindellagerung (26-30) verspannenden und dadurch ihre Lagerreibung erhöhenden Belastung ausgebildet ist.

2. Spindelanordnung nach Anspruch 1,
dadurch gekennzeichnet, daß die Bremseinrichtung (42-48) hydraulisch betätigbar ist.

3. Spindelanordnung nach Anspruch 1 oder 2,
dadurch gekennzeichnet, daß
- die Spindellagerung (26-30) mindestens ein axial und radial belastbares Wälzlager (26) aufweist und
- die Bremseinrichtung (42-48) in axialer Richtung verspannend auf dieses Wälzlager (26) wirkt.

4. Spindelanordnung nach Anspruch 3,
dadurch gekennzeichnet, daß die Bremseinrichtung (42-48) einen zwischen einem Boden (12) des Gehäuses (10) und einem Boden (22) der Werkstückspindel (20) angeordneten Bremskolben (46) aufweist.

5. Spindelanordnung nach Anspruch 4,
dadurch gekennzeichnet, daß der Bremskolben (46) als Ringkolben rings um einen Fortsatz (24) der Werkstückspindel (20) angeordnet ist, der in einem hohlen Schaft (14) des Gehäuses (10) aufgenommen ist.

6. Spindelanordnung nach Anspruch 4 oder 5,
dadurch gekennzeichnet, daß zwischen dem Bremskolben (46) und der Werkstückspindel (20) ein Axialdruck-Wälzlager (48) angeordnet ist.

7. Spindelanordnung nach einem der Ansprüche 4 bis 6,
dadurch gekennzeichnet, daß der Bremskolben (46) in einem hinteren Zylinderraum (42) hinter dem Boden (22) der Werkstückspindel (20) angeordnet ist, und dieser Boden (22) einen vorderen Zylinderraum (32) begrenzt, in dem ein hydraulisch betätigbarer Kolben (34) der Werkstückspanneinrichtung (34-38) angeordnet ist.

8. Spindelanordnung nach einem der Ansprüche 1 bis 7,
dadurch gekennzeichnet, daß der Rastkörper (58) mittels eines hydraulischen Rastkolbens (56) gegen eine elastische Vorspannung betätigbar ist.

9. Spindelanordnung nach den Ansprüchen 2 und 8,
dadurch gekennzeichnet, daß
- das Gehäuse (10), in dem die Werkstückspindel (20) gelagert ist, in der Art eines Werkzeughalters (90) an einer Aufspannfläche (16) eines Werkzeugträgers (18) befestigt ist, der mindestens eine weitere solche Aufspannfläche (16) aufweist, und
- von der Aufspannfläche (16) drei gesteuerte Fluidkanäle (64,66,68) im Werkzeugträger (18) ausgehen, die mit je einem im Gehäuse (10) angeordneten Fluidkanal (40,44,54) zum Betätigen der Werkstückspanneinrichtung (32-38), der Bremseinrichtung (42-48) und des Rastkolbens (56) kommunizieren.

10. Spindelanordnung nach einem der Ansprüche 1 bis 9,
dadurch gekennzeichnet, daß die Rastenanordnung (60) und der Rastkörper (58) Spitzverzahnungen aufweisen.

## Claims

1. A lockable spindle arrangement, especially for taking over a workpiece (W) from a rotating work spindle (80) of a lathe, comprising
- a workpiece spindle (20) which is journalled in a housing (10) by means of a spindle bearing (26-30), carries a workpiece clamping means (32-38) and is provided with a notched structure (60);
- a lock member (58) which is guided in the housing (10) and adapted to be locked with the notched structure (60), and
- means (42-48) for braking the workpiece spindle (20),
characterised in that the braking means (42-48) is designed to apply a load tensioning the spindle bearing (26-30) and thus increasing its bearing friction.

2. The spindle arrangement according to claim 1,
characterised in that the braking means (42-48) is adapted to be operated hydraulically.

3. The spindle arrangement according to claim 1 or 2,
characterised in that
- the spindle bearing (26-30) includes at least one axially and radially loadable rolling bearing (26), and
- the braking means (42-48) acts in axial direction on said rolling bearing (26) in a tensioning manner.

4. The spindle arrangement according to claim 3,
characterised in that the braking means (42-48) comprises a brake piston (46) arranged between a bottom (12) of the housing (10) and a bottom (22) of the workpiece spindle (20).

5. The spindle arrangement according to claim 4,
characterised in that the brake piston (46) is arranged as an annular piston around a protrusion (24) of the workpiece spindle (20), which protrusion (24) is received in a hollow shaft (14) of the housing (10).

6. The spindle arrangement according to claim 4 or 5,
characterised in that a thrust rolling bearing (48) is arranged between the brake piston (46) and the workpiece spindle (20).

7. The spindle arrangement according to one of claims 4 to 6,
characterised in that the brake piston (46) is arranged in a rear cylinder space (42) behind the bottom (22) of the workpiece spindle (20), and that said bottom (22) defines a front cylinder space (32) in which a hydraulically operable piston (34) of the workpiece clamping means (34-38) is arranged.

8. The spindle arrangement according to one of claims 1 to 7,
characterised in that the lock member (58) is adapted to be actuated by means of a hydraulic locking piston (56) against a resilient bias.

9. The spindle arrangement according to claims 2 and 8,
characterised in that
- the housing (10) in which the workpiece spindle (20) is journalled is mounted in the manner of a toolholder (90) on a clamping surface (16) of a tool support (18) which comprises at least one further such clamping surface (16), and
- three controlled fluid passages (64, 66, 68) start in the tool support (18) from the clamping surface (16) which passages communicate with one fluid passage (40, 44, 54) each arranged in the housing (10) for actuating the workpiece clamping means (32-38), the braking means (42-48) and the locking piston (56).

10. The spindle arrangement according to one of claims 1 to 9,
characterised in that the notched structure (60) and the lock member (58) are provided with pointed toothings.

## Revendications

1. Dispositif de broche pouvant être immobilisé, en particulier pour reprendre une pièce à usiner (W) d'une broche principale tournante (80) d'un tour, comprenant
- une broche porte-pièce (20) qui est montée par l'intermédiaire d'un palier de broche (26 - 30) dans un boîtier (10), porte un moyen de serrage de pièce (32 - 38) et présente un moyen d'enclenchement (60),
- un corps d'enclenchement (58) qui est guidé dans le boîtier (10) et peut s'enclencher dans le moyen d'enclenchement (60), et
- un moyen (42 - 48) pour freiner la broche porte-pièce (20),
caractérisé en ce que le moyen de freinage (42 - 48) est conçu de façon à appliquer une charge exerçant une contrainte sur le palier de broche (26 - 30) et augmentant ainsi son frottement de palier.

2. Dispositif de broche selon la revendication 1,
caractérisé en ce que le moyen de freinage peut être actionné hydrauliquement.

3. Dispositif de broche selon la revendication 1 ou 2,
caractérisé en ce que
- le palier de broche (26 - 30) présente au moins un palier à roulement (26) pouvant être chargé axialement et radialement et
- le moyen de freinage (42 - 48) agit sur ce palier à roulement (26) en exerçant une contrainte dans la direction axiale.

4. Dispositif de broche selon la revendication 3,
caractérisé en ce que le moyen de freinage (42 - 48) présente un piston de freinage (46) disposé entre un fond (12) du boîtier (10) et un fond (22) de la broche porte-pièce (20).

5. Dispositif de broche selon la revendication 4,
caractérisé en ce que le piston de freinage (46) est monté sous la forme d'un piston annulaire disposé autour d'une partie en saillie (24) de la broche porte-pièce (20), qui est reçue dans un arbre creux (14) du boîtier (10).

6. Dispositif de broche selon la revendication 4 ou 5,
caractérisé en ce qu'un palier à roulement à poussée axiale (48) est disposé entre le piston de freinage (46) et la broche porte-pièce (20).

7. Dispositif de broche selon l'une quelconque des revendications 4 à 6,
caractérisé en ce que le piston de freinage (46) est disposé dans un volume cylindrique (42) arrière situé derrière le fond (22) de la broche porte-pièce (20) et en ce que ce fond (22) délimite un volume cylindrique avant (32) dans lequel est disposé un piston (34) pouvant être actionné hydrauliquement du moyen de serrage de pièce (34 - 38).

8. Dispositif de broche selon l'une quelconque des revendications 1 à 7,
caractérisé en ce que le corps d'enclenchement (58) peut être actionné au moyen d'un piston d'enclenchement hydraulique (56) agissant à l'encontre d'une précontrainte élastique.

9. Dispositif de broche selon les revendications 2 et 8,
caractérisé en ce que
- le boîtier (10), dans lequel la broche porte-pièce (20) est montée sur palier, est fixé à la façon d'un porte-outil (90) à une surface de serrage (16) d'un support d'outil (18) qui présente au moins une autre surface de serrage (16) de ce genre, et
- trois conduits de fluide (64, 66, 68) asservis situés dans le support d'outils (18) partent de la surface de serrage (16), lesquels communiquent chacun avec un conduit de fluide (40, 44, 54) respectif, disposé dans le boîtier (10), du moyen de freinage (42 - 48) et du piston d'enclenchement (56) pour actionner le moyen de serrage de pièce (32 - 38).

10. Dispositif de broche selon l'une quelconque des revendications 1 à 9,
caractérisé en ce que le moyen d'enclenchement (60) et le corps d'enclenchement (58) présentent une denture pointue.
